# EUROPEAN PATENT APPLICATION

(11) **EP 2 015 509 A1**
(43) Date of publication of application: **14.01.2009**
(21) Application number: 07721791.7
(22) Date of filing: 25.06.2007
(51) Int. Cl.: H04L 12/24

(54) **METHOD, SYSTEM AND NODE DEVICE OF ESTABLISHING IDENTIFIER MAPPING RELATIONSHIP**

(30) Priority: 09.10.2006 CN 200610063058
(71) Applicant: Huawei Technologies Co., Ltd., Longgang District Shenzhen 518129 (CN)
(72) Inventor: LI, Fengzhu, Shenzhen, Guangdong 518129 (CN); XU, Yongliang, Shenzhen, Guangdong 518129 (CN)
(74) Representative: Hengelhaupt, Jürgen
(86) International application number: PCT/CN2007/070175
(87) International publication number: WO 2008/043284

(57) **Abstract**

The invention discloses a method for establishing an identifier mapping relationship, in which a end node of a service allocates its ingress identifier, generates an identifier mapping relationship of the end node by the ingress identifier and link resources of the end node, and sends a signaling message that carries the ingress identifier of the end node to upstream nodes along the direction to a head node of the service; and the head node receives the signaling message from an adjacent downstream node, extracts the ingress identifier of the adjacent downstream node as the egress identifier of the head node, and generates an identifier mapping relationship of the head node by the egress identifier and link resources of the head node. The invention also discloses a system and node apparatus for establishing an identifier mapping relationship. The technical solutions provided by the invention may realize automatic configuration of an identifier mapping relationship.

## Description

This application claims priority to the Chinese Patent Application No. 200610063058.6, filed with the Chinese Patent Office on October 9, 2006 and entitled "Method for Establishing an Identifier Mapping Table", the contents of which are incorporated herein by reference in their entirety.

### Field of the Invention

The invention relates to communication technologies, and in particular, to a method, system and node apparatus for establishing an identifier mapping relationship.

### Background of the Invention

The conventional mode of supplying optical transport network services is mainly based on static manual configuration. However, as the data service increases, this static configuration method can hardly meet the flexible and changeful service demands. In this situation, a mesh network is developed based on traditional network morphology, so as to realize automatic configuration of the network and dynamic traffic scheduling.

In the prior art, the Multi-Protocol Label Switching (MPSL) is extended to form a Generalized Multi-Protocol Label Switching (GMPLS) protocol suite which includes routing protocols, such as the Open Shortest Path First-Engineering Extensions (OSPF-TE) signaling protocol, Resource Reservation Setup Protocol with Service-Engineering Extensions (RSVP-TE), or Constraint-Based Label Distribution Protocol (CR-LDP). By using the GMPLS protocol suite, various functional demands of an Automatically Switched Optical Network (ASON) can be met.

By introducing a control plane into the ASON, the traffic impacted by a network failure may be dynamically recovered by selecting another protection path. Through mesh networking, the ASON may support the recovery of multiple failures, thus providing higher service reliability. The planning of a mesh network is directly driven by services. A mesh network is planned on the basis of end-to-end traffic to meet corresponding link bandwidth demands, which is more convenient and flexible compared with a ring network. In combination with wavelength division multiplexing technologies, such as dense wavelength division multiplexing (DWDM), the ASON may dynamically change the network topology based on the changes of service demands, which meets the demands of data services. The GMPLS control plane based ASON has the afore-mentioned flexibility; however, in the available operating mode, re-routing based on RSVP-TE can only be recovered within several seconds, which is unable to meet the demands of operators, let alone the demands of voice services which require a 50ms protection time. Therefore, a too long time to recovery in a mesh network impacts the ASON that is built by operators based on mesh networking.

In this background, a recovery method of transferring signaling by overhead is developed, which realizes fast recovery when a failure occurs in the mesh network. The recovery speed may nearly reach the traditional ring network's protection level, that is, 50ms. The method is mainly as follows: a route calculation module or any other method determines working path information and protection path information, to enhance the usage efficiency of network resources, generally, protection paths corresponding to multiple separate working paths share link resources in a same segment; an identifier mapping table is configured on each node traversed by a protection path, this can distinguish which working path requires a protection path, by using only one identifier of limited bytes after a failure occurs; when a failure occurs on the working path used by a service, the identifier is transferred by using an overhead byte, and thus the service on the original working path is switched to the corresponding protection path, so that fast recovery is realized.

The foregoing fast recovery requires that an identifier should be applied in advance on each node traversed by the protection path, and that a corresponding identifier mapping table should be configured. At present, identifier mapping tables are configured manually through a network management system in a centralized manner, that is, the network management system generates identifier mapping tables in a centralized manner, and then the identifier mapping tables are configured manually on each node that needs the configuration, namely, each node traversed by the protection path. In the process of practices and applications, the inventor of the present invention finds that this configuration method relies too much on the network management system. In addition, to configure identifier mapping tables, the network management system needs to conduct operations on each node, the operation process is too complicated, and a large amount of manual work is needed, so the risk of operation failure is very high. Meanwhile, too much manual work leads to too much manpower consumption, and errors are easy to occur, so the configuration efficiency is low.

### Summary of the Invention

The embodiments of the present invention provide a method, system and node apparatus for establishing an identifier mapping relationship. On this basis, an identifier mapping relationship can be configured automatically, and fast recovery can be realized when a service failure occurs.

An embodiment of the present invention provides a method for establishing an identifier mapping relationship including: a end node of a service allocates an ingress identifier of the end node, the ingress identifier and link resources of the end node generate the identifier mapping relationship of the end node, and the end node transfers a signaling message which carries the ingress identifier of the end node to upstream nodes along the direction to a head node of a service; after receiving the signaling message from an adjacent downstream node, the head node extracts the ingress identifier of the adjacent downstream node, and takes the extracted ingress identifier as the egress identifier of the head node, and the egress identifier and link resources of the head node generate the identifier mapping relationship of the head node.

An embodiment of the present invention provides a system for establishing an identifier mapping relationship including: a head node of a service and an end node of a service, where the end node includes an ingress identifier allocating unit, adapted to allocate an ingress identifier of the end node; a first identifier mapping relationship generating unit, adapted for the ingress identifier and link resources of the end node to generate the identifier mapping relationship of the end node; and a first signaling transferring unit, adapted to transfer a signaling message that carries the ingress identifier of the end node to upstream nodes along the direction to the head node; the head node includes an egress identifier generating unit, adapted to extract the ingress identifier of the adjacent downstream node from the signaling message after receiving the signaling message from the adjacent downstream node, and take the extracted ingress identifier as the egress identifier of the head node; and a second identifier mapping relationship generating unit, adapted for the egress identifier and link resources of the head node to generate the identifier mapping relationship of the head node.

An embodiment of the present invention provides a node apparatus for establishing an identifier mapping relationship including: an ingress identifier allocating unit, adapted to allocate an ingress identifier of the node; a first identifier mapping relationship generating unit, adapted for the ingress identifier and link resources of the node to generate the identifier mapping relationship of the node when the node is an end node of a service; and a first signaling transferring unit, adapted to transfer a signaling message that carries the ingress identifier of the node to upstream nodes along the direction to a head node of a service.

An embodiment of the present invention provides another node apparatus for establishing an identifier mapping relationship including: an egress identifier generating unit, adapted to extract the ingress identifier of an adjacent downstream node from a signaling message after receiving the signaling message from the adjacent downstream node, and take the extracted ingress identifier as the egress identifier of the node; and a second identifier mapping relationship generating unit, adapted for the egress identifier and link resources of the node to generate the identifier mapping relationship of the node when the node is a head node of a service.

An embodiment of the present invention further provides another node apparatus for establishing an identifier mapping relationship including: an ingress identifier allocating unit, adapted to allocate an ingress identifier of the node; a signaling transferring unit, adapted to transfer a signaling message that carries the ingress identifier of the node to upstream nodes along the direction to a head node; an egress identifier generating unit, adapted to extract the ingress identifier of an adjacent downstream node from a signaling message after receiving the signaling message from the adjacent downstream node, and take the extracted ingress identifier as the egress identifier of the node; and a third identifier mapping relationship generating unit, adapted for the ingress identifier, the egress identifier and link resources of the node to generate the identifier mapping relationship of the node.

From the technical solutions provided by the embodiments of the invention, it can be seen that, a service end node firstly generates the identifier mapping relationship of the end node by the ingress identifier and link resources of the end node, and then sends a signaling message that carries the ingress identifier of the end node to upstream nodes along the direction to a service head node; the head node receives the signaling message from an adjacent downstream node, extracts the ingress identifier of the adjacent downstream node and takes the extracted ingress identifier as the egress identifier of the head node, and generates the identifier mapping relationship of the head node by the egress identifier and link resources of the head node. It can be seen that in the process of transferring a signaling message which carries the ingress identifier of a node from the service end node to the service head node, the identifier mapping relationship of each node traversed by the protection path of the service is established in turn, and thus the identifier mapping relationship is configured automatically. Through the automatically configured identifier mapping relationship in accordance with the technical solutions provided by the embodiments of the invention, when a service failure occurs, fast recovery can be realized.

### Brief Description of the Drawings

Figure 1 is a flowchart of the method for establishing an identifier mapping relationship according to an embodiment of the present invention;

Figure 2 is a schematic diagram of mesh network fast recovery; and

Figure 3 is a schematic diagram illustrating the structure of the system for establishing an identifier mapping relationship according to an embodiment of the present invention.

### Detailed Description of the Embodiments

According to an embodiment of the invention, when configuring a shared protection path, a service head node (those skilled in the art should understand that the service head node is the head node of the protection path of the service) transfers a forward signaling message to downstream nodes hop by hop along the direction from the head node to the end node; after receiving the forward signaling message, the end node allocates an ingress identifier of the end node, the ingress identifier and link resources of the end node generate an identifier mapping table, and the end node generates, as triggered by the forward signaling message, a reverse signaling message, and transfers the reverse signaling message to upstream nodes hop by hop along the direction from the end node to the head node; after receiving the reverse signaling message, an upstream node allocates an ingress identifier of the upstream node, extracts the ingress identifier of the adjacent downstream node from the reverse signaling message, takes the extracted ingress identifier as the egress identifier of the upstream node, and the ingress identifier, egress identifier and link resources of the upstream node generate an identifier mapping table of the upstream node. According to the method provided by the embodiments of the present invention, an identifier mapping table may be automatically configured, and when a service failure occurs, fast recovery may be realized.

Before the specific technical solutions provided by the present invention are described, some technical terms used hereunder are explained first. A mesh network refers to a mesh optical network. Herein the optical network includes synchronous digital hierarchy (SDH), synchronous optical network (SONET), and optical transport network (OTN). A working path refers to a network connection for transferring a client signal between different locations. A protection path refers to a network connection for recovering the transmission of a client signal when a failure occurs on a working path, so as to prevent transmission interruption of the client signal due to a network failure. To improve the network bandwidth usage efficiency, it is feasible to reserve only path resources for the protection path. These path resources may be shared by multiple protection paths each of which corresponds to a respective working path. Usually, the working path and the protection path in an optical network are bidirectional and are generally established from one end (originating end) to the other end (terminating end). The originating end is a service head node and the terminating end is a service end node. In this bidirectional connection, the unidirectional connection from the originating end to the terminating end is called "forward" hereunder, and the unidirectional connection in the opposite direction is called "reverse" hereunder. Accordingly, a forward signaling message refers to a signaling message that is transferred in the direction from the head node to the end node, and a reverse signaling message refers to a signaling message that is transferred in the direction from the end node to the head node.

An identifier is a value that an upstream node and a downstream node of a particular protection path allocate to the protection path on a particular link based on negotiation, for the upstream node and the downstream node to instruct each other to activate the corresponding protection path using the link, and uniquely determining the protection path when multiple protection paths that correspond to different working paths share the same reserved path resources. The identifier is transferred through an associated signaling path. The identifier in the embodiments of the invention has two functions: first, indicating whether the working path needs recovery; second, when the path resources are shared by multiple protection paths that correspond to different working paths, that is, the path resources of the link are used for protection paths for multiple working paths, indicating for which protection path the path resources will be used, that is, determining which protection path will use the path resources.

It should be noted that, the technical solutions provided by the embodiments of the present invention may apply to many signaling protocols, including RSVP-TE and CR-LDP.

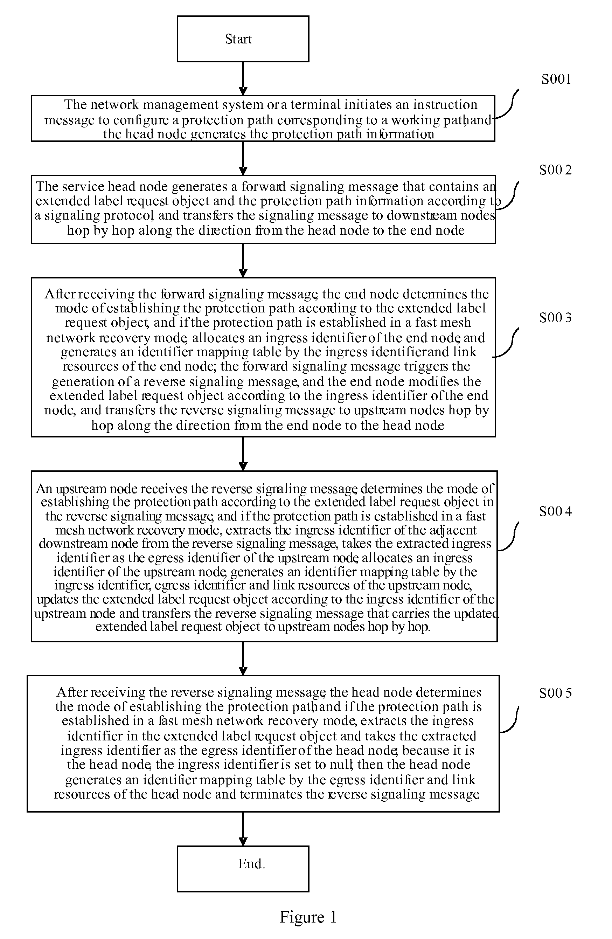

Figure 1 is a flowchart of the method for establishing an identifier mapping relationship according to an embodiment of the invention. As shown in Figure 1, the specific procedure of the method includes:

S001: The network management system or other terminals that can initiate network operation instructions initiate an instruction message to configure a protection path corresponding to a working path, where the instruction message carries at least the information about the head node and the end node of the service, that is, the information about the head node and the end node of the protection path of the service. After receiving the instruction message, the head node automatically generates and saves protection path information according to the information about the head node and the end node. The generated protection path information specifically includes the information about each node traversed by the protection path. The automatic generation of the protection path information according to the information about the head node and the end node may be achieved by the prior art, so the specific procedure is omitted here.

S002: The head node generates a forward signaling message that includes an extended label request object and the aforesaid protection path information according to a signaling protocol, and transfers the forward signaling message to downstream nodes hop by hop in the direction from the head node to the end node, in other words, transfers the forward signaling message that includes the extended label request object and the protection path information to the end node.

The extended label request object may be obtained by extending a label request object in a signaling protocol, so that the extended label request object has not only the original functions, but also the function of requesting an identifier, that is, allocating an identifier locally. RSVP-TE is taken as an example for specific description:

For example, an extended label request object may be obtained by extending Class_Num in a Generalized Label object, as shown in Table 1:

**Table 1 Specific format of the Generalized Label object**

| 0 | 1 | 2 | 3 |
|---|---|---|---|
| Object_Length | | Class_Num | C_Type |
| Label | | | |

Herein, if Class_Num is set to 16, the protection path is established based on traditional mesh network sharing, and there is no need to request an identifier or establish an identifier mapping table. If Class_Num is set to other values, such as 1, it indicates that the protection path is established in the fast recovery mode based on overhead signaling, and that it is necessary to request an identifier and establish an identifier mapping table. The label is used for storing a locally allocated identifier of a node (those skilled in the art should know that the specific content of an identifier is a value).

Or, an extended label request object may be obtained by extending both the Label_Request object and the Generalized Label object. For a Label_Request object, Class_Num in the object is extended, as shown in Table 2:

**Table 2 Specific format of the Label_Request object**

| 0 | 1 | 2 | 3 |
|---|---|---|---|
| Object_Length | | Class_Num | C_Type |
| LSP Encoding type | Switching type | G-PID | |

Herein, if Class_Num is set to 19, the protection path is established based on traditional mesh network sharing, and there is no need to request an identifier or establish an identifier mapping table. If Class_Num is set to other values, such as 2, it indicates that the protection path is established in the fast recovery mode based on overhead signaling, and that it is necessary to request an identifier and establish an identifier mapping table. The extension of the Generalized Label object has been described above, so it is omitted here.

S003: After receiving the forward signaling message, the end node determines the mode of establishing the protection path according to the extended label request object in the signaling message, and if the protection path is established in the fast mesh network recovery mode, allocates an ingress identifier of the end node, and generates an identifier mapping table of the end node by the ingress identifier and link resources of the end node. In addition, the forward signaling message triggers the generation of a reverse signaling message, and the end node modifies the content of the Label field of the extended label request object in the reverse signaling message according to the ingress identifier of the end node, and then transfers the reverse signaling message that carries the ingress identifier of the end node to upstream nodes along the direction from the end node to the head node.

S004: An upstream node (the upstream node in this embodiment is a middle node of the protection path of the service) receives the reverse signaling message, determines the mode of establishing the protection path according to the extended label request object in the reverse signaling message, and if the protection path is established in the fast mesh network recovery mode, extracts the ingress identifier in the extended label request object and takes it as the egress identifier of the upstream node, allocates an ingress identifier of the upstream node, generates an identifier mapping table by the ingress identifier, egress identifier and link resources of the upstream node, updates the content of the Label field in the extended label request object according to the ingress identifier of the upstream node, that is, puts the ingress identifier of the upstream node in the extended label request object, and then transfers the reverse signaling message that carries the updated extended label request object to upstream nodes hop by hop. Those skilled in the art shall understand that the protection path may traverse one middle node, or several middle nodes. No matter how many middle nodes the protection path traverses, each middle node may automatically establish a respective identifier mapping relationship according to the solution described in step S004.

Because the reverse signaling message is transferred in the direction from the end node to the head node, after the reverse signaling message passes through the middle node of the protection path, it is finally transferred to the head node of the protection path, and then step S005 is executed.

S005: After receiving the reverse signaling message, the head node determines the mode of establishing the protection path according to the extended label request object in the reverse signaling message, and if the protection path is established in the fast mesh network recovery mode, extracts the ingress identifier in the extended label request object and takes it as the egress identifier of the head node. Because the node is the head node, the ingress identifier is set to null or not allocated. Then, the head node generates an identifier mapping table by the egress identifier and link resources of the head node, and terminates the reverse signaling message.

Through step S001 to step S005, each node traversed by the protection path of a service automatically establishes a respective identifier mapping table, that is, finishes the process of automatically establishing an identifier mapping table. Those skilled in the art shall understand that the essential content recorded by an identifier mapping table is an identifier mapping relationship. At present, the identifier mapping relationship is generally recorded by an identifier mapping table, thus usually called an identifier mapping table. In practice, the identifier mapping relationship may be recorded not only by the identifier mapping table, but also may be recorded in other ways.

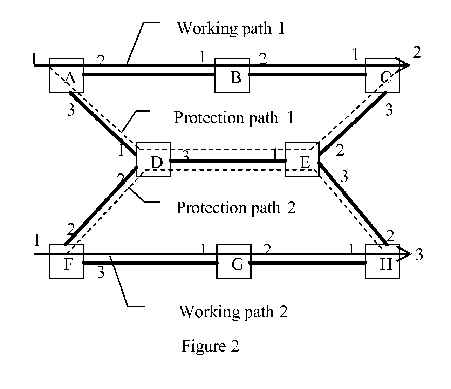

For better understanding of the objectives, technical solutions and advantages of the embodiments of the invention, the embodiments are further described by extending the Generalized Label object of RSVP-TE as an example, as shown in Figure 2, which is a schematic diagram of mesh network fast recovery.

With reference to Figure 2, a first mode of establishing an identifier mapping table is exemplified hereunder by taking the establishing of a protection path corresponding to a working path A->B->C of a service as an example. The procedure includes the steps from S101 to S108.

S101: The network management system or a terminal initiates an instruction message to configure a shared protection path corresponding to the working path A->B->C. Thus the head node A generates information about a protection path A->D->E->C according to the instruction message, and stores the protection path information.

S102: The head node A generates a forward signaling message that includes an extended label request object Generalized Label and the protection path information according to RSVP-TE, transfers the forward signaling message to the downstream node D in the direction from the head node A to the end node C, and allocates a label value 1 on the node A for use by the protection path A->D->E->C, according to RSVP-TE.

Herein, a label value is allocated to this protection path only. The purpose is to distinguish this protection path from other protection paths, so as to reserve resources, that is, to reserve path and cross resources for establishing a network connection so as to prevent these resources from being occupied by other connections.

S103: After receiving the forward signaling message from the node A, the node D allocates a label value 1 on the node D for use by the protection path according to RSVP-TE (the label value allocated by a downstream node for the protection path and that allocated by an upstream node for the protection path are the same), and then transfers the forward signaling message to the downstream node E.

S104: After receiving the forward signaling message from the node D, similarly, the node E allocates a label value 1 on the node E for use by the protection path according to RSVP-TE, and then transfers the forward signaling message to the end node C.

S15: After receiving the forward signaling message from the node E, the end node C allocates a label value 1 on the end node C for use by the protection path according to RSVP-TE, determines that the protection path is established in the fast mesh network recovery mode according to the Class_Num value of the extended label request object Generalized Label in the forward signaling message, and allocates an ingress identifier of the end node C, with its value set to 1. In addition, the end node C obtains corresponding link resources including ingress port, egress port, ingress path, and egress path according to the available RSVP allocation mechanism, for example, configuring a value of 3 for the ingress port, 1 for the ingress path, 2 for the egress port and 1 for the egress path. Then, the end node C generates an identifier mapping table by the link resources and the allocated ingress identifier, as shown in Table 3.

**Table 3 Identifier mapping table of node C**

| Ingress Port | Ingress Path | Ingress Identifier | Egress Port | Egress Path | Egress Identifier | Remarks |
|---|---|---|---|---|---|---|
| 3 | 1 | 1 | 2 | 1 | - | Protection path 1 |

Besides generating the identifier mapping table, the end node C generates a reverse signaling message, as triggered by the received forward signaling message, and puts the ingress identifier of the end node C (the value of the identifier is set to 1) in the Label field of the extended label request object Generalized Label, and then transfers the reverser signaling message that carries the extended label request object to the upstream node E in the direction from the end node C to the head node A. Those skilled in the art shall understand that to ensure that the reverse signaling message can reach every node of the protection path, the reverse signaling message also contains the information about each node traversed by the protection path.

S106: According to the afore-mentioned generated information about the protection path of the service, it is known that the node E is a middle node traversed by the protection path. After receiving the reverse signaling message from the end node C, the node E determines that the protection path is established in the fast mesh network recovery mode according to the Class_Num value of the extended label request object Generalized Label in the reverse signaling message, and then extracts the ingress identifier in the label in the Generalized Label object (the value of the identifier is set to 1) as the egress identifier of the node E. Moreover, the node E allocates an ingress identifier of the node E, such as setting the value to 1.

Then, the node E generates an identifier mapping table according to the link resources obtained based on the available RSVP allocation mechanism such as ingress port (set to 1), egress port (set to 2), ingress path (set to 1) and egress path (set to 1), ingress identifier (set to 1), and egress identifier (set to 1) of the node E, as shown in Table 4:

**Table 4 Identifier mapping table of node E**

| Ingress Port | Ingress Path | Ingress Identifier | Egress Port | Egress Path | Egress Identifier | Remarks |
|---|---|---|---|---|---|---|
| 1 | 1 | 1 | 2 | 1 | 1 | Protection path 1 |

Then, the node E takes the ingress identifier of the node E (set to 1) as the current value of the label in the extended label request object Generalized Label, replacing the original value 1 of the label in Generalized Label, and then transfers the reverse signaling message that carries the updated extended label request object to the upstream node D.

S107: According to the afore-mentioned generated information about the protection path of the service, it is known that the node D is a middle node traversed by the protection path. After receiving the reverse signaling message, the node D determines that the protection path is established in the fast mesh network recovery mode according to the Class_Num value of the extended label request object Generalized Label in the reverse signaling message, then extracts the ingress identifier in the label in the Generalized Label object (the value of the identifier is set to 1), takes the extracted ingress identifier as the egress identifier of the node D, and allocates an ingress identifier of the node D, such as setting the value to 1. Then, the node D generates an identifier mapping table according to the link resources obtained based on the available RSVP allocation mechanism such as ingress port, egress port, ingress path, egress path, ingress identifier (set to 1), and egress identifier (set to 1) of the node D, as shown in Table 5:

**Table 5 Identifier mapping table of node D**

| Ingress Port | Ingress Path | Ingress Identifier | Egress Port | Egress Path | Egress Identifier | Remarks |
|---|---|---|---|---|---|---|
| 1 | 1 | 1 | 3 | 1 | 1 | Protection path 1 |

Then, the node D takes the ingress identifier of the node D (set to 1) as the current value of the label in the extended label request object Generalized Label, replacing the original value 1 of the label in Generalized Label, and transfers the reverse signaling message that carries the updated extended label request object to the head node A.

S108: After receiving the reverse signaling message, the head node A determines that the protection path is established in the fast mesh network recovery mode according to the Class_Num value of the extended label request object Generalized Label in the reverse signaling message, then extracts the ingress identifier in the label in the Generalized Label object (the value of the identifier is set to 1), and takes the extracted ingress identifier as the egress identifier of the head node A. Because the node A is the head node, the ingress identifier is set to null. Then, the head node A generates an identifier mapping table according to the link resources obtained based on the available RSVP allocation mechanism such as ingress port, egress port, ingress path, egress path, and egress identifier (set to 1), as shown in Table 6. Then the reverse signaling message is terminated and the configuration of protection path 1 is finished.

**Table 6 Identifier mapping table of head node A**

| Ingress Port | Ingress Path | Ingress Identifier | Egress Port | Egress Path | Egress Identifier | Remarks |
|---|---|---|---|---|---|---|
| 1 | 1 | - | 3 | 1 | 1 | Protection path 1 |

Still referring to Figure 2, which is a schematic diagram of mesh network fast recovery, a second mode of establishing identifier mapping table is exemplified hereunder by taking the establishing of a protection path corresponding a working path F->G->H as an example. The procedure includes the steps from S201 to S208.

S201: The network management system or a terminal initiates an instruction message to configure a shared protection path corresponding to the working path F->G->H. Thus the head node F generates information about a protection path F->D->E->H according to the instruction message, and stores the protection path information.

S202: The head node F generates a forward signaling message that includes an extended label request object Generalized Label and the protection path information, according to RSVP-TE, transfers the forward signaling message to the downstream node D in the direction from the head node F to the end node H, and allocates a label value 2 on the node F for use by the protection path A->D->E->C, according to RSVP-TE. Steps S203-S205 are similar to steps103-105, thus omitted here.

S206: After receiving the reverse signaling message from the node H, the node E determines that the protection path is established in the fast mesh network recovery mode according to the Class_Num value of the extended label request object Generalized Label in the reverse signaling message, then extracts the ingress identifier in the label in the Generalized Label object (the value of the identifier is set to 1), takes the extracted ingress identifier as the egress identifier of the node E, and allocates an ingress identifier of the node E, such as setting the value to 2. Because the node E already has an identifier mapping table, that is, the aforesaid Table 4, the node E updates the identifier mapping table according to the link resources obtained based on the available RSVP allocation mechanism including ingress port, egress port, ingress path, egress path, ingress identifier (set to 2), and egress identifier (set to 1) of the node E, as shown in Table 7:

**Table 7 Identifier mapping table of node E**

| Ingress Port | Ingress Path | Ingress Identifier | Egress Port | Egress Path | Egress Identifier | Remarks |
|---|---|---|---|---|---|---|
| 1 | 1 | 1 | 2 | 1 | 1 | Protection path 1 |
| 1 | 1 | 2 | 3 | 1 | 1 | Protection path 2 |

Then, the node E takes the ingress identifier of the node E (set to 2) as the current value of the label in the extended label request object Generalized Label, replacing the original value 1 of the label in Generalized Label, and then transfers the reverse signaling message that carries the updated extended label request object to the upstream node D.

S207: This step is similar to S206. After receiving the reverse signaling message, the node D determines the ingress identifier and egress identifier, and updates the identifier mapping table, as shown in Table 8:

**Table 8 Identifier mapping table of node D**

| Ingress Port | Ingress Path | Ingress Identifier | Egress Port | Egress Path | Egress Identifier | Remarks |
|---|---|---|---|---|---|---|
| 1 | 1 | 1 | 3 | 1 | 1 | Protection path 1 |
| 2 | 1 | 1 | 3 | 1 | 2 | Protection path 2 |

Then, the node D transfers the reverse signaling message that carries the updated extended label request object to the head node F.

S208 is similar to S108, and thus is omitted here.

It can be seen that the configuration of the identifier mapping relationship of the protection path 2 (that is, F->D->E->H) is finished through S201 to S208.

From the nodes traversed by the protection path A->D->E->C and the nodes traversed by the protection path F->D->E->H, it can be seen that the path resources on the link D-E are shared by two protection paths, A->D->E->C and F->D->E->H, and different identifiers and label values are allocated to different protection paths automatically, and thus it is determined to which working path the two protection paths correspond respectively, and which path resources of the link have been used.

It should be noted that in the above embodiments, the head node generates the protection path information, transfers the forward signaling message that carries the protection path information to the end node, and then triggers the end node, the middle node and the head node in turn to establish an identifier mapping relationship of each node; however, in practice, the end node may generate the protection path information, directly generate an identifier mapping relationship of the end node, and then transfer a reverse signaling message that carries the ingress identifier of the end node along the direction of the head node, to trigger each node traversed by the protection path to establish a respective identifier mapping relationship.

Moreover, no matter whether the protection path information corresponding to the service is generated by the head node or the end node, to make sure that each node traversed by the protection path can automatically establish a respective identifier mapping relationship, the reverse signaling message needs to pass through every node traversed by the protection path in its transmission from the end node to the head node; however, the reverse signaling message may also pass through other nodes out of the protection path in its transmission process.

Also, in practice, the protection path of a service may contain only a head node and an end node. In this case, after the end node establishes its identifier mapping relationship and transfers a reverse signaling message to upstream nodes, the adjacent upstream node is the head node, so after the head node establishes its identifier mapping relationship according to the technical solutions provided by the above embodiments, the identifier mapping relationship of the protection path of the service is established.

Those skilled in the art understand that all or part of the steps in the above method according to the embodiments of the invention can be implemented by hardware under the instruction of a program which may be stored in a computer readable storage medium, like a read only memory (ROM) or random access memory (RAM), a magnetic disk or a compact disk.

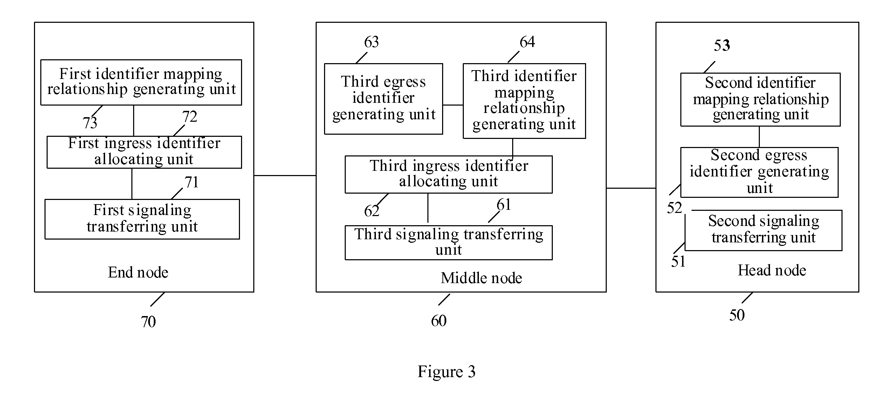

Figure 3 is a schematic diagram illustrating the structure of the system for establishing an identifier mapping relationship according to an embodiment of the present invention. The system includes a service head node 50 (that is, the head node of the protection path of the service), a service end node 60 (that is, the end node of the protection path of the service), and a middle node 70 of the protection path of the service (the number of middle nodes is not limited). The specific structure of and connection between each node are further described hereunder, in combination with the operating principle of the system.

First, a second signaling transferring unit 51 of the head node 50 generates a signaling message that carries the protection path information of the service, transfers the signaling message to the end node 70, where the protection path information includes the information about each node traversed by the protection path. In consideration of compatibility with the solutions which do not need to establish an identifier mapping relationship, the signaling message may also carry an extended label request object for indicating the mode of establishing the protection path of the service.

Then, when the end node 70 receives the signaling message from the head node 50, a first ingress identifier allocating unit 72 is triggered to allocate an ingress identifier of the end node 70. It should be noted that if the signaling message carries the extended label request object, whether the protection path is established in the fast mesh network recovery mode is determined first, and if the protection path is established in this mode, an ingress identifier of the end node 70 is allocated, or else, there is no need to establish an identifier mapping relationship for the protection path and those steps related to the identifier mapping relationship are not executed. It should be understood that if the signaling message does not carry the extended label request object for indicating the mode of establishing the protection path of the service, the protection path may be established in the fast mesh network recovery mode by default, and thus the first ingress identifier allocating unit 72 directly allocates the ingress identifier of the end node 70. After the first ingress identifier allocating unit 72 allocates the ingress identifier to the end node 70, the first identifier mapping relationship generating unit 73 generates an identifier mapping relationship of the end node 70 by the ingress identifier and link resources of the end node 70. To make the other nodes of the protection path automatically generate an identifier mapping relationship, the first signaling transferring unit 71 of the end node 70 transfers the signaling message that carries the ingress identifier of the end node 70 to an upstream node in the direction of the head node. In the embodiment of the system shown in Figure 3, the upstream node adjacent to the end node 70 is the middle node 60.

After the middle node 60 receives from the end node 70 the signaling message that carries the ingress identifier of the end node 70, the middle node 60 extracts from the signaling message, by a third identifier generating unit 63, the identifier of the adjacent downstream node (the downstream node adjacent to the middle node 60 is the end node 70) as the egress identifier of the middle node 60; and generates the ingress identifier of the middle node 60 by a third identifier allocating unit 62. Then a third identifier mapping relationship generating unit 64 generates an identifier mapping relationship according to the ingress identifier, egress identifier and link resources of the middle node 60. Similarly, to make the other nodes of the protection path automatically generate an identifier mapping relationship, a third signaling transferring unit 61 of the middle node 60 transfers the signaling message that carries the ingress identifier of the middle node 60 to upstream nodes in the direction of the head node.

Similar to the signaling message carrying the protection path information that is transferred from the head node to the end node, the signaling message transferred to the head node from the end node and middle node may also carry an extended label request object for indicating the mode of establishing the protection path of the service, so as to be compatible with the available solutions that need not establish an identifier mapping relationship.

Those skilled in the art shall understand that there may be multiple middle nodes traversed by the protection path, each node having the internal structure of the middle node 60. No matter how many middle nodes there are, the signaling message shall be transferred to the head node 50 finally. The protection path may also have no middle node, that is, there is no middle node 60 and there are only the head node 50 (the head node of the protection path) and end node 70 (the end node of the protection path). In this case, the signaling message that the end node 70 transfers to upstream nodes is directly transferred to the head node 50.

After the head node 50 receives the signaling message from the adjacent downstream node, the head node 50 extracts from the signaling message, by a second identifier generating unit 52, the ingress identifier of the adjacent downstream node and takes the extracted ingress identifier as the egress identifier of the head node 50. Then a second identifier mapping relationship generating unit 53 generates an identifier mapping relationship according to the ingress identifier, egress identifier and link resources of the head node 50. After the head node 50 establishes the identifier mapping relationship, the identifier mapping relationship of each node traversed by the protection path is established.

The system for establishing an identifier mapping relationship according to the embodiments of the invention is described above. Another embodiment of the invention also discloses a node apparatus for establishing an identifier mapping relationship. The node apparatus may have various structures.

For example, the node apparatus only has the internal structure of the end node 70 shown in Figure 3. Specifically, the node apparatus includes an ingress identifier allocating unit, adapted to allocate an ingress identifier of the node; a first identifier mapping relationship generating unit, adapted to generate an identifier mapping relationship of the node by the ingress identifier and link resources of the node when the node is a service end node; and a first signaling transferring unit, adapted to transfer a signaling message that carries the ingress identifier of the node to upstream nodes in the direction of the head node.

Or, the node apparatus may only have the internal structure of the middle node shown in Figure 3. Specifically, the apparatus node includes an ingress identifier allocating unit, adapted to allocate an ingress identifier of the node; a signaling message transferring unit, adapted to transfer a signaling message that carries the ingress identifier of the node to upstream nodes in the direction of the head node of the protection path; an egress identifier generating unit, adapted to extract the ingress identifier of an adjacent downstream node in a signaling message after receiving the signaling message from the adjacent downstream node, and take the extracted ingress identifier as the egress identifier of the node; and a third identifier mapping relationship generating unit, adapted to generate an identifier mapping relationship by the ingress identifier, egress identifier and link resources of the node.

Or, the node apparatus only has the internal structure of the head node shown in Figure 3. Specifically, the node apparatus includes an egress identifier generating unit, adapted to extract an ingress identifier of an adjacent downstream node from a signaling message after receiving the signaling message from the adjacent downstream node, and take the extracted ingress identifier as the egress identifier of the node; and a second identifier mapping relationship generating unit, adapted to generate an identifier mapping relationship of the node by the egress identifier and link resources of the node when the node is a service head node. The node apparatus may further include a second signaling transferring unit, adapted to generate a signaling message carrying the protection path information of the service, and transfer the signaling message to the end node, to trigger the ingress identifier allocating unit of the end node to allocate an ingress identifier of the end node. Herein the protection path information contains information about each node traversed by the protection path.

Those skilled in the art shall understand that because there are many services in the network, it is possible that a certain node apparatus is the head node of a service, but is the end node or a middle node of another service. To meet such diversified demands, the node apparatus may have an internal structure that can meet the various node demands. For example, the node apparatus may have all the internal structures of the end node 70 and head node 50, may have all the structures of the end node 70 and middle node 60, may have all the structures of the head node 50 and middle node 60, or may have all the internal structures of the end node 70, middle node 60 and head node 50, which is very common.

According to the embodiments of the invention, it can be seen that by transferring a signaling message that carries the ingress identifier of a node from the end node to the head node in turn and then establishing an identifier mapping relationship of the node, each node automatically configures a respective identifier mapping relationship in a distributed manner, which solves the problem of manually configuring identifier mapping relationships in a centralized manner in the prior art, simplifies the process of establishing an identifier mapping relationship, decreases manual intervention and prevents operation error. Moreover, the technical solutions disclosed by the embodiments of the invention may use a signaling protocol in the prior ASON technology, and thus may be well combined with the ASON technology.

Although the present invention has been described through exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A method for establishing an identifier mapping relationship, comprising:
allocating an ingress identifier of a end node of a service by the end node, generating an identifier mapping relationship of the end node by the ingress identifier and link resources of the end node, and transferring a signaling message which carries the ingress identifier of the end node to an upstream node in the direction of a head node of the service; and
after the head node receives a signaling message from an adjacent downstream node, extracting the ingress identifier of the adjacent downstream node from the signaling message, taking the extracted ingress identifier as an egress identifier of the head node, and generating an identifier mapping relationship of the head node by the egress identifier and link resources of the head node.

2. The method of claim 1, wherein if a protection path of the service comprises a middle node between the head node and the end node, the method further comprises:
after the middle node receives a signaling message from an adjacent downstream node, allocating an ingress identifier of the middle node, extracting the ingress identifier of the adjacent downstream node from the signaling message, taking the extracted ingress identifier as an egress identifier of the middle node, generating an identifier mapping relationship of the middle node by the ingress identifier, egress identifier and link information of the middle node, and transferring a signaling message which carries the ingress identifier of the middle node to an upstream node in the direction of the head node.

3. The method of claim 1 or 2, before allocating the ingress identifier of the end node, further comprising:
generating, by the head node, a signaling message that carries protection path information of the service, and transferring the signaling message hop by hop to the end node, wherein the protection path information includes information about nodes traversed by the protection path.

4. The method of claim 3, before the head node generates the signaling message that carries the protection path information of the service, further comprising:
receiving, by the head node, an instruction message to configure the protection path of the service from a network management system or a terminal.

5. The method of claim 3, wherein the signaling message that carries the protection path information further comprises an extended label request object indicating a mode of establishing the protection path of the service; and the method further comprises: before allocating the ingress identifier of the end node,
determining, by the end node, that the protection path of the service is established in a fast mesh network recovery mode, according to the extended label request object contained in the signaling message that carries the protection path information of the service.

6. The method of claim 3, wherein the signaling message from the adjacent downstream node further comprises an extended label request object indicating a mode of establishing the protection path of the service; and the method further comprises: before allocating the ingress identifier of the middle node,
determining, by the middle node, that the protection path of the service is established in a fast mesh network recovery mode, according to the extended label request object contained in the signaling message transferred from the adjacent downstream node.

7. A system for establishing an identifier mapping relationship, comprising a head node of a service and an end node of the service, wherein
the end node comprises:
an ingress identifier allocating unit, adapted to allocate an ingress identifier of the end node; a first identifier mapping relationship generating unit, adapted to generate an identifier mapping relationship of the end node by the ingress identifier and link resources of the end node; and a first signaling transferring unit, adapted to transfer a signaling message that carries the ingress identifier of the end node to an upstream node in the direction of the head node; and
the head node comprises:
an egress identifier generating unit, adapted to extract an ingress identifier of an adjacent downstream node from a signaling message after receiving the signaling message from the adjacent downstream node, and take the extracted ingress identifier as an egress identifier of the head node; and a second identifier mapping relationship generating unit, adapted to generate an identifier mapping relationship of the head node by the egress identifier and link resources of the head node.

8. The system of claim 7, wherein if a protection path of the service comprises a middle node between the head node and the end node, the system further comprises a middle node, the middle node comprising:
an ingress identifier allocating unit, adapted to allocate an ingress of the middle node; an egress identifier generating unit, adapted to extract an ingress identifier of an adjacent downstream node from a signaling message after receiving the signaling message from the adjacent downstream node, and take the extracted ingress identifier as an egress identifier of the middle node; a third identifier mapping relationship generating unit, adapted to generate an identifier mapping relationship of the middle node by the ingress identifier, the egress identifier and link resources of the middle node; and a third signaling transferring unit, adapted to transfer a signaling message that carries the ingress identifier of the middle node to an upstream node in the direction of the head node.

9. The method of claim 7 or 8, wherein the head node further comprises:
a second signaling transferring unit, adapted to generate a signaling message that carries protection path information of the service, and transfer the signaling message to the end node to trigger the ingress identifier allocating unit of the end node to allocate an ingress identifier of the end node, wherein the protection path information includes information about nodes traversed by the protection path.

10. A node apparatus for establishing an identifier mapping relationship, comprising:
an ingress identifier allocating unit, adapted to allocate an ingress identifier of the node;
a first identifier mapping relationship generating unit, adapted to generate an identifier mapping relationship of the node by the ingress identifier and link resources of the node when the node is an end node of a service; and
a first signaling transferring unit, adapted to transfer a signaling message that carries the ingress identifier of the node to an upstream node in the direction of a head node of the service.

11. The node apparatus of claim 10, further comprising:
an egress identifier generating unit, adapted to extract an ingress identifier of an adjacent downstream node from a signaling message after receiving the signaling message from the adjacent downstream node, and take the extracted ingress identifier as an egress identifier of the node; and
a second identifier mapping relationship generating unit, adapted to generate an identifier mapping relationship of the node by the egress identifier and link resources of the node when the node is the head node of the service.

12. The node apparatus of claim 10 or 11, further comprising:
a third identifier mapping relationship generating unit, adapted to generate an identifier mapping relationship of the node by the ingress identifier of the node allocated by the ingress identifier allocating unit, the egress identifier of the node provided by the egress identifier generating unit and link resources of the node, when the node is a middle node of a protection path of the service.

13. A node apparatus for establishing an identifier mapping relationship, comprising:
an egress identifier generating unit, adapted to extract an ingress identifier of an adjacent downstream node from a signaling message after receiving the signaling message from the adjacent downstream node, and take the extracted ingress identifier as an egress identifier of the node; and
a second identifier mapping relationship generating unit, adapted to generate an identifier mapping relationship of the node by the egress identifier and link resources of the node when the node is a head node of a service.

14. The node apparatus of claim 13, further comprising:
an ingress identifier allocating unit, adapted to allocate an ingress identifier of the node;
a signaling transferring unit, adapted to transfer a signaling message that carries the ingress identifier of the node to an upstream node in the direction of the head node; and
a third identifier mapping relationship generating unit, adapted to generate an identifier mapping relationship of the node by the ingress identifier of the node allocated by the ingress identifier allocating unit, the egress identifier of the node provided by the egress identifier generating unit and link resources of the node, when the node is a middle node of a protection path of the service.

15. A node apparatus for establishing an identifier mapping relationship, comprising:
an ingress identifier allocating unit, adapted to allocate an ingress identifier of the node;
a signaling transferring unit, adapted to transfer a signaling message that carries the ingress identifier of the node to an upstream node in the direction of a head node;
an egress identifier generating unit, adapted to extract an ingress identifier of an adjacent downstream node from a signaling message after receiving the signaling message from the adjacent downstream node, and take the extracted ingress identifier as an egress identifier of the node; and
a third identifier mapping relationship generating unit, adapted to generate an identifier mapping relationship of the node by the ingress identifier, the egress identifier and link resources of the node.
